(19) Europäisches Patentamt
European Patent Office
Office européen des brevets

(11) **EP 4 280 121 A1**

(12) **EUROPEAN PATENT APPLICATION**

(43) Date of publication:
**22.11.2023 Bulletin 2023/47**

(21) Application number: **23151986.9**

(22) Date of filing: **17.01.2023**

(51) International Patent Classification (IPC):
***G06N 5/01*** *(2023.01)*

(52) Cooperative Patent Classification (CPC):
**G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.05.2022 JP 2022082844**

(71) Applicant: **FUJITSU LIMITED**
**Kawasaki-shi, Kanagawa 211-8588 (JP)**

(72) Inventor: **Sazawa, Shinichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57)    An information processing program that causes a computer to execute a process that includes based on a constraint condition for at least a part of a plurality of state variables, acquiring a number of second state variables whose set values satisfy the constraint condition determined by binary values when a first binary value is set in a first state variable; determining a number of searches for prohibiting the first state variable from being updated from the first binary value, based on the number of second state variables that corresponds to the first state variable and the first binary value; and searching for solutions to a problem by repeating updating values of one state variable among the plurality of state variables based on an amount of change in values of the energy function for the number of searches for prohibiting.

FIG. 1

**Description**

FIELD

The embodiments discussed herein are related to an information processing program, an information processing method, and an information processing device.

BACKGROUND

An information processing device is sometimes used to solve a combinatorial optimization problem. The combinatorial optimization problem is formulated by an energy function for an Ising model, which is a model representing the behavior of spins of a magnetic material. The energy function is sometimes also called an evaluation function or an objective function.

The information processing device searches for a combination that minimizes the value of the energy function, for example, among combinations of the values of state variables included in the energy function. In this case, the combination of the values of the state variables that minimizes the value of the energy function relates to a ground state or an optimal solution represented by a set of the state variables. Approaches for obtaining approximate solutions to combinatorial optimization problems in a practical amount of time include the simulated annealing (SA) method and the tabu search method as examples.

For example, a system that solves image matching problems by executing a local search algorithm with the tabu search heuristics has been proposed. In addition, in order to minimize the distribution loss in the distribution system, there is also a proposal for a distribution system control device that optimizes the system configuration by a genetic algorithm or tabu search approach.

Furthermore, there is also a proposal for a system including a quantum processor that produces samples represented by a bit string according to a predetermined probability distribution, and a digital computer that executes a classical heuristic optimization algorithm, based on the samples produced by the quantum processor. The proposed system uses the tabu search algorithm, the SA, or the like as the classical heuristic optimization algorithm. The proposed system uses a tabu list that identifies the bit that is not intended to be flipped, when imposing tabu constraints.

Japanese National Publication of International Patent Application No. 2010-525431, Japanese Laid-open Patent Publication No. 2003-219558, U.S. Patent Application Publication No. 2012/0045136, and U.S. Patent Application Publication No. 2016/0042294 are disclosed as related art.

SUMMARY

[TECHNICAL PROBLEM]

As described above, in the tabu search method, changes in the values of the state variables are controlled by the tabu list in the search for solutions. In the tabu list, a period called tabu tenure is set to prohibit the value of a certain state variable from changing when the value of the certain state variable is changed. However, it is not easy to properly set the tabu tenure for a problem. For example, too long tabu tenure can restrict the search space and lower the likelihood of obtaining a good solution. In addition, too short tabu tenure can make it difficult to escape from the local solution and make the search stagnant.

In one aspect, an object of the present embodiments is to enhance solution performance.

[SOLUTION TO PROBLEM]

According to an aspect of the embodiments, an information processing program that causes at least one computer to execute a process, the process includes storing problem information that indicates a problem represented by an energy function that includes a plurality of state variables; and based on a constraint condition for at least a part of the plurality of state variables, acquiring a number of second state variables whose set values satisfy the constraint condition determined by binary values when a first binary value is set in a first state variable; determining a number of searches for prohibiting the first state variable from being updated from the first binary value, based on the number of second state variables that corresponds to the first state variable and the first binary value; and searching for solutions to a problem by repeating updating values of one state variable among the plurality of state variables based on an amount of change in values of the energy function for the number of searches for prohibiting.

[ADVANTAGEOUS EFFECTS OF INVENTION]

In one aspect, solution performance may be enhanced.

BRIEF DESCRIPTION OF DRAWINGS

FIG. 1 is a diagram explaining an information processing device according to a first embodiment;
FIG. 2 is a diagram illustrating a hardware example of an information processing device according to a second embodiment;
FIG. 3 is a diagram illustrating an example of functions of the information processing device;
FIG. 4 is a diagram illustrating an example of a tabu tenure (tt) management table;
FIG. 5 is a diagram illustrating an example of a current state table and a best solution table;
FIG. 6 is a flowchart illustrating a processing example of the information processing device;
FIG. 7 is a flowchart illustrating an example of tabu search execution; and
FIG. 8 is a flowchart illustrating another processing example of the information processing device.

DESCRIPTION OF EMBODIMENTS

Hereinafter, the present embodiments will be described with reference to the drawings.

[First Embodiment]

A first embodiment will be described.

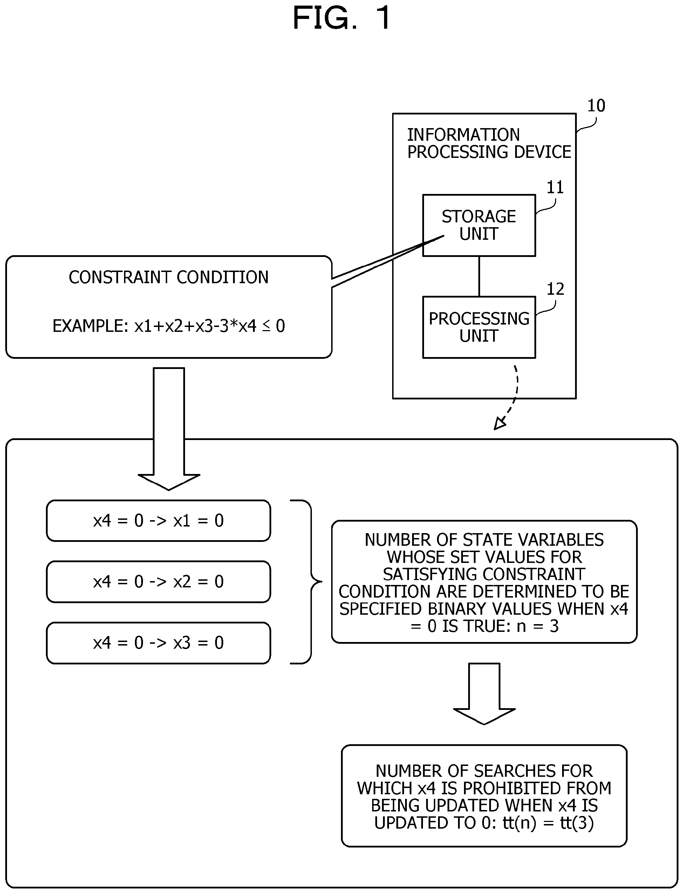

FIG. 1 is a diagram explaining an information processing device according to a first embodiment.
The information processing device 10 supports solving combinatorial optimization problems by a tabu search method. The information processing device 10 may execute the solving by the tabu search method. The information processing device 10 includes a storage unit 11 and a processing unit 12.
The storage unit 11 may be a volatile storage device such as a random access memory (RAM) or may be a nonvolatile storage device such as a flash memory. The storage unit 11 may include an electronic circuit such as a register. The processing unit 12 may be an electronic circuit such as a central processing unit (CPU), a digital signal processor (DSP), an application specific integrated circuit (ASIC), a field programmable gate array (FPGA), or a graphics processing unit (GPU). The processing unit 12 may be a processor that executes a program. The "processor" may be a set of a plurality of processors (multiprocessor).
The combinatorial optimization problem is formulated by an Ising-type energy function and is replaced with a problem to minimize the value of the energy function, for example. The energy function includes a plurality of state variables. The state variable is a binary variable that takes a value of 0 or 1. The state variable may be expressed as a bit. The value of the energy function indicates the energy corresponding to the state of an Ising model represented by the values of the plurality of state variables. The solution to the combinatorial optimization problem is represented by the values of a plurality of state variables. The solution that minimizes the energy represents the ground state of the Ising model and corresponds to an optimal solution to the combinatorial optimization problem.
The Ising-type energy function is represented by formula (1).
[Mathematical Formula 1]

$$E(\boldsymbol{x}) = -\frac{1}{2} \sum_{\langle i,j \rangle} W_{ij} x_i x_j - \sum_i b_i x_i \qquad (1)$$

A state vector x has a plurality of state variables as elements and represents the state of the Ising model. Formula (1) is an energy function formulated in a quadratic unconstrained binary optimization (QUBO) format. Note that, in the case of a problem to maximize the energy, it is sufficient to reverse the signs of the energy function.
The first term on the right side of formula (1) is to integrate products of the values of two state variables and a weighting coefficient without omission and duplication for all combinations of two state variables selectable from among all state variables. The subscripts i and j denote indices of the state variables. An i-th state variable is denoted by $x_i$. A j-th state variable is denoted by $x_j$. A weight between the i-th state variable and the j-th state variable or a weighting coefficient indicating coupling strength is denoted by $W_{ij}$. $W_{ij} = W_{ji}$ and $W_{ii} = 0$ are fulfilled.

The second term on the right side of formula (1) is to find a total sum of products of respective biases for all state variables and the values of the state variables. A bias for the i-th state variable is indicated by $b_i$.

When the value of the state variable $x_i$ changes to $1 - x_i$, the increment of the state variable $x_i$ can be represented as $\delta x_i = (1 - x_i) - x_i = 1 - 2x_i$. For the energy function E(x), the amount of change $\Delta E$ in energy due to a change in the state variable $x_i$ is represented by formula (2).

[Mathematical Formula 2]

$$\Delta E_i = (1 - 2x_i) \left( \sum_j W_{ij} x_j + b_i \right) \qquad (2)$$

When the state variable $x_i$ that meets $\Delta E_i < 0$ changes to 1 from 0 or to 0 from 1, the energy E(x) is lessened. In this case, the solution after the change of $x_i$ is an improved solution obtained by improving the current solution.

The tabu search method searches for a solution using a tabu list. The tabu list is information indicating state variables whose values are prohibited from being updated, among a plurality of state variables. For each of the plurality of state variables, the tabu list includes information indicating a period during which the value of each state variable is prohibited from changing.

Here, the tabu search method is a search approach based on a greedy search. The greedy search is an approach that repeats the procedure of computing $\Delta E_i$ when the values of all state variables are separately changed, for the current state, selecting a state variable $x_k$ that minimizes $\Delta E_i$, and flipping a value of $x_k$ to obtain the next state. An initial state in the solution search, for example an initial solution, is given in advance. From formula (2), energy E of the next candidate state lowers when $\Delta E < 0$ is true. The next state that lowers the energy E most from the current state is selected. The unit of processing for transitioning from the current state to the next state is defined as one iteration (one search). The best solution, for example the solution with the smallest energy, obtained after repeating the iteration a particular number of times is treated as the final solution.

Note that, in the case of the local solution, for example a state in which $\Delta E$ is positive for all indices, the energy E grows regardless of which state variable value is flipped, and any of the next candidate states have worse solutions. When the current state has a local solution, the candidate state with the smallest $\Delta E$, for example the candidate state whose $\Delta E$ has a positive value closest to zero, is selected as the next state.

In the tabu search method, the tabu list is used as follows in the above-described greedy search. The tabu list has independent iteration counters for each state variable. For example, as a period during which update of the value of the relevant state variable is prohibited, the iteration counter holds an upper limit value of the range of the number of iterations for which the update is prohibited.

The iteration counter corresponding to the state variable $x_i$ is expressed as an iteration counter [i]. For example, when the value of the specified state variable $x_j$ is updated in a certain iteration, (the current number of iterations) + the tabu tenure is set in the iteration counter [j] corresponding to the state variable $x_j$. The tabu tenure indicates a period during which the value of a certain state variable is prohibited from being updated. For example, the period is represented by the number of iterations for which the value of the relevant state variable is prohibited from being updated from the time point when a certain state variable is altered to a certain value. The number of iterations is called the number of searches.

In the tabu search method, when the iteration counter [i] $\geq$ the current number of iterations is true in a certain iteration, the state variable $x_i$ is not treated as a transition candidate. On the other hand, in the certain iteration, when the iteration counter [i] < the current number of iterations is true, the state variable $x_i$ is treated as a transition candidate. For example, it is assumed that a certain local solution is reached at the 100th iteration, and the value of the state variable $x_j$ is changed at the 101st iteration to move to a worse solution. At this time, when the tabu tenure is assumed to be 10, the iteration counter [j] = 101 + 10 = 111 is assigned. Therefore, until the number of iterations > 101 + 10 = 111 is fulfilled, the state variable $x_j$ is basically excluded from update candidates. By using the tabu list in this manner, the worse solution is restrained from falling back into the original local solution. However, when the best solution is updated after updating the value of the state variable $x_i$, the state variable $x_i$ is treated as a transition candidate regardless of the value of the iteration counter [i]. Then, among the transition candidate state variables, the value of the state variable with the smallest $\Delta E$ is updated.

For example, even when a uniform value or random values or the like is employed as the tabu tenure for each state variable, the worse solution is restrained from falling back to the original local solution to some extent, but there is also a case where it will not be sufficiently restrained depending on constraint conditions in the problem. The constraint conditions indicate the constraints imposed on each state variable according to the problem.

Thus, the processing unit 12 determines the tabu tenure used in the tabu search method for each value of the state variable, based on the constraint conditions included in problem information. The tabu tenure determined by the processing unit 12 is abbreviated as tt. The tt indicates the number of searches for which the value of a certain state variable is prohibited from being updated when the certain state variable is set to a certain binary value. It can also be said that the tt is a period for which a certain state variable is excluded from update candidates when the certain state variable is set to a certain binary value.

The problem information is information indicating a problem represented by the Ising-type energy function in formula (1) and is information from which the energy function is created. For example, the problem information includes information on a cost function indicating the cost desired to be minimized in the problem, information on constraint conditions imposed on the problem, and information on constants and variables included in the objective function and the constraint conditions. Since the constraint condition is represented by a mathematical formula for at least a part of state variables among all state variables included in the energy function, the constraint condition may be called a constraint formula. For example, in the case of the problem to minimize the energy function, the energy function is formulated such that the state violating the constraint conditions has very high energy. In addition, the problem information is input to the information processing device 10 from the outside. The processing unit 12 stores the input problem information in the storage unit 11.

Based on a constraint condition that is included in the problem information and for at least a part of the plurality of state variables, the processing unit 12 acquires the number of second state variables whose set values for satisfying the constraint condition are determined to be specified binary values when a first binary value is set in a first state variable. The number of second state variables whose set values for satisfying the constraint condition are determined to be specified binary values is referred to as the number of subtransitions or implications. In the following, the number of second state variables will be expressed as the number of implications, for example the implication count.

As an example, it is supposed that the problem information includes the constraint condition "x1 + x2 + x3 - 3*x4 $\leq$ 0". For example, the processing unit 12 assigns x4 = 0. An example of the first state variable is indicated by "x4". An example of the first binary value is indicated by "0" in "x4 = 0". According to the constraint condition "x1 + x2 + x3 - 3*x4 $\leq$ 0", when x4 = 0 is true, x1 = 0 has to be fulfilled in order to satisfy the constraint condition. Therefore, the processing unit 12 obtains the implication (x4 = 0 -> x1 = 0) for the first state variable x4 = 0. The implication (x4 = 0 -> x1 = 0) states that, when x4 = 0 is true, x1 = 0 has to be fulfilled in order to satisfy the relevant constraint condition. In this case, an example of the second state variable is indicated by "x1". An example of the specified binary value is indicated by "0" in "x1 = 0".

For example, the processing unit 12 acquires the implication for the constraint condition as follows. It is assumed that a and b denote binary values, for example 0 or 1. First, the processing unit 12 fixes a state variable xp = a. Next, the processing unit 12 fixes a state variable xq = b. Then, when the constraint condition is not met no matter how the values of the state variables other than the state variables xp and xq are allocated, the processing unit 12 obtains the implication (xp = a -> xq! = b (i.e. xq = (1 - b))).

Similarly, the processing unit 12 obtains the implication (x4 = 0 -> x2 = 0) and the implication (x4 = 0 -> x3 = 0) for the first state variable x4 = 0. Both of "x2" and "x3" are examples of the second state variables. Therefore, the processing unit 12 acquires the number n of state variables whose set values for satisfying the constraint condition are determined to be specified binary values, for example the implication count n, when x4 = 0 is true, as n = 3.

The processing unit 12 similarly acquires the implication count for the first state variable x4 = 1 and the implication count for each binary value when each of x1, x2, and x3 is assigned as the first state variable. Note that, when the problem information includes a plurality of constraint conditions, the processing unit 12 finds the implication counts for each constraint condition for the relevant first binary value of the relevant first state variable and sums up the implication counts for each constraint condition to calculate the implication count for the relevant first binary value of the relevant first state variable.

In searching for a solution by the tabu search method, the processing unit 12 determines the number of searches for which the first state variable is prohibited from being updated from the first binary value when the first state variable is updated to the first binary value, based on the number of second state variables corresponding to the first state variable and the first binary value. The number of searches for which the first state variable is prohibited from being updated from the first binary value when the first state variable is updated to the first binary value relates to the tt corresponding to the first binary value of the first state variable. The processing unit 12 finds the tt as a function tt(n) for the implication count n.

For example, the processing unit 12 increases the tt as the implication count n increases. In one example, the processing unit 12 finds the tt so as to be in proportion to the implication count n. In this case tt(n) = a*n + $\beta$ is assigned. Here, a positive real number is denoted by a. A real number equal to or greater than zero is denoted by $\beta$. The real numbers $\alpha$ and $\beta$ are given in advance. For example, when the implication count n of the first state variable x4 = 0 is n = 3, the processing unit 12 finds the number of searches tt(n) for which the first state variable x4 is prohibited from being updated when the first state variable x4 is updated to 0, as tt(n) = tt(3). Similarly, the processing unit 12 finds the number of searches tt for which x4 is prohibited from being updated when x4 is updated to 1, according to the implication count of x4 = 1. In addition, the processing unit 12 similarly finds the tt for each binary value to be set, for each of x1, x2, and x3.

The processing unit 12 outputs information on the tt determined for each binary value with respect to each of the plurality of state variables. For example, the processing unit 12 may input the determined tt to another device that executes the tabu search method to cause the another device to execute the tabu search method. Alternatively, the processing unit 12 may execute the tabu search method using the determined tt. In this tabu search method, the tt determined for each binary value with respect to each of the plurality of state variables is used to control the number of searches for which the values are prohibited from being updated.

According to the information processing device 10, based on a constraint condition that is included in the problem information and for at least a part of the plurality of state variables, the number of second state variables whose set values for satisfying the constraint condition are determined to be specified binary values when the first binary value is set in the first state variable is acquired. In searches for solutions to the problem in which a process of updating the value of any one state variable among the plurality of state variables based on the amount of change in the value of the energy function caused by updating the value of any one state variable among the plurality of state variables is repeatedly performed, the number of searches for which the first state variable is prohibited from being updated from the first binary value when the first state variable is updated to the first binary value is determined based on the number of second state variables corresponding to the first state variable and the first binary value. This allows the information processing device 10 to enhance the solution performance.

For example, in the search by the tabu search method, the process of updating the value of the state variable with the best amount of change in energy when the value of any one of the plurality of state variables is updated is repeatedly performed. For example, in the search by the tabu search method, when the current timing belongs to the number of searches for which the value of the first state variable is prohibited from being updated, the first state variable is excluded from value update candidates because the value of the first state variable is prohibited from being updated. In this case, the state variable whose value is to be updated will be selected from among the state variables other than the first state variable.

Note that, in the case of the problem to minimize the energy, the "best" amount of change in energy indicates the smallest amount of change. In the case of the problem to maximize the energy, the "best" amount of change in energy indicates the greatest amount of change.

Here, it is not easy to properly set the tabu tenure for the problem. As an example of a problem for which it is difficult to set proper tabu tenure, there is the fixed cost constraint problem. The fixed cost constraint problem is a problem to minimize the costs when loads are transported using trucks in a case where the trucks and the loads each have predefined costs. A cost function for the fixed cost constraint problem is represented by formula (3), for example.

[Mathematical Formula 3]

$$\text{Minimize} \quad \sum_{k \in K} \sum_{n \in N} \delta_{nk} c_n x_{nk} + \sum_{k \in K} d_k y_k \qquad (3)$$

A set of loads is denoted by N. A set of trucks is denoted by K. When a load n can be packed into a truck k, $\delta_{nk}$ has 1 and has 0 otherwise. Note that n is an element of N, which means $n \in N$. In addition, k is an element of K, which means $k \in K$. The cost of the load is denoted by $c_n$. The cost of the truck is denoted by $d_k$. As inputs, N, K, $\delta_{nk}$, $c_n$, and $d_k$ are given in advance. In addition, a state variable $x_{nk}$ has 1 when the load n is carried by the truck k and has 0 otherwise. A state variable $y_k$ has 1 when using the truck k and has 0 otherwise.

In addition, the constraint conditions are represented by formulas (4) and (5).

[Mathematical Formula 4]

$$\sum_{k \in K} \delta_{nk} x_{nk} = 1 \qquad (\forall n \in N) \qquad (4)$$

[Mathematical Formula 5]

$$\delta_{nk} x_{nk} \leq y_k \qquad (\forall n \in N, \ \forall k \in K) \qquad (5)$$

The constraint condition in formula (4) states that all loads are allocated to only one truck available for packing.

The constraint condition in formula (5) states that the truck k is used if there is the load n allocated to the truck k. The energy function for the fixed cost constraint problem represented by formulas (3) to (5) is formulated as formula (6).
[Mathematical Formula 6]

$$\sum_{k \in K} \sum_{n \in N} \delta_{nk} c_n x_{nk} + \sum_{k \in K} d_k y_k + \sum_{n \in N} \left( \sum_{k \in K} \delta_{nk} x_{nk} - 1 \right)^2$$
$$+ \gamma \sum_{k \in K} \left( \max \left( 0, \sum_{n \in N} \delta_{nk} x_{nk} - y_k \right) \right) \tag{6}$$

In formula (6), $\gamma$ denotes a real number fulfilling $\gamma > 0$ and is a sufficiently great penalty coefficient.
Here, for example, it is assumed that 100 loads can be stacked on both of the trucks 1 or 2, and all of the loads are allocated to the truck 1. For example, the state is as follows.

$$x_{1,1} = x_{2,1} = ... = x_{100,1} = 1$$

$$x_{1,2} = x_{2,2} = ... = x_{100,2} = 0$$

$$y_1 = 1, y_2 = 0$$

If this state transitions to $y_1 = 0$ and $y_2 = 1$, a very great number of instances of $x_{n,1} \le y_1 (= 0)$ cause constraint violations. At this time, if the tabu tenure of $y_1$ is small, $y_1$ immediately returns to 1 in order to resolve the constraint violations.
As described above, for example, if there is a constraint formula in the form of $x_n \le y$ for y, $x_n$ has to have 0 whenever y becomes 0 if $x_n = 1$ is true for $x_n$ included in the constraint formula, in order to meet the constraint. Such a constraint in which the fixation of the value of the state variable occurs because of a certain transition is called a subconstraint for the transition. The number of subconstraints for a certain transition relates to the implication count corresponding to the certain transition.
In the tabu search method, when a transition that updates a certain state variable to a certain binary value is performed, the more implications corresponding to the transition, the more it is expected that a constraint-satisfying solution is attained only after undergoing many transitions that violate the constraint while the certain state variable is maintained at the certain binary value. Accordingly, by increasing the tt as the implication count corresponding to the relevant transition increases, the information processing device 10 may reduce the likelihood of transitioning to another state from a certain local solution and thereafter transitioning again to the same local solution. Consequently, the information processing device 10 may make it easy to escape from the local solution and may reduce the likelihood that the search for a solution will stagnate. In addition, by decreasing the tt as the implication count corresponding to the relevant transition decreases, the information processing device 10 may avoid excessive restriction of the solution search space and raise the likelihood of discovering a better solution. In this manner, the information processing device 10 may enhance the solution performance.
For example, the information processing device 10 causes another device to execute a search for a solution by the tabu search method using the determined tt or the information processing device 10 executes the search, whereby the ability to escape from the local solution is improved, and it becomes possible to obtain an excellent solution in a short period of time.

[Second Embodiment]

Next, a second embodiment will be described.

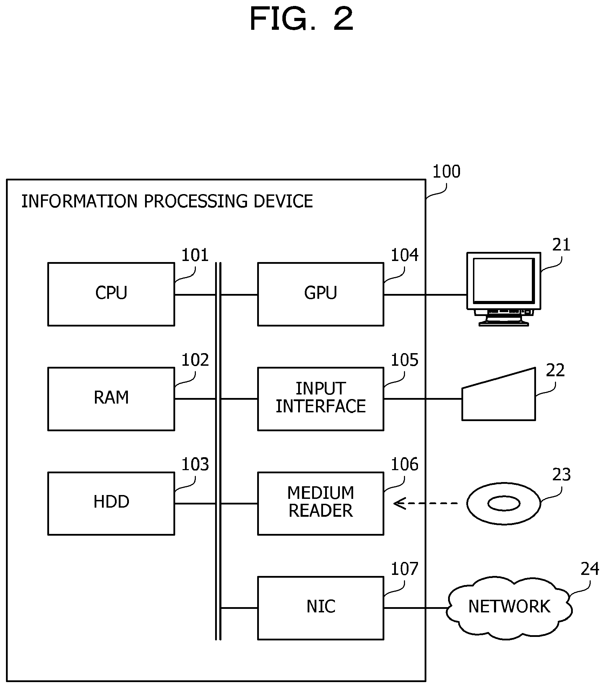

FIG. 2 is a diagram illustrating a hardware example of an information processing device according to the second embodiment.
The information processing device 100 makes a search using the tabu search method to solve a combinatorial optimization problem and outputs the solution located in the search. The combinatorial optimization problem is formulated by the Ising-type energy function represented by formula (1). The information processing device 100 includes a CPU 101, a RAM 102, a hard disk drive (HDD) 103, a graphics processing unit (GPU) 104, an input interface 105, a medium reader 106, and a network interface card (NIC) 107. Note that the CPU 101 is an example of the processing unit 12 according to the first embodiment. The RAM 102 or the HDD 103 is an example of the storage unit 11 according to the first embodiment.

The CPU 101 is a processor that executes program instructions. The CPU 101 loads at least a part of a program and data stored in the HDD 103 into the RAM 102 and executes the program. Note that the CPU 101 may include a plurality of processor cores. In addition, the information processing device 100 may include a plurality of processors. The processing to be described below may be executed in parallel using a plurality of processors or processor cores. In addition, a set of the plurality of processors will be sometimes referred to as a "multiprocessor" or simply a "processor".

The RAM 102 is a volatile semiconductor memory that temporarily stores the program executed by the CPU 101 and data used by the CPU 101 for arithmetic operations. Note that the information processing device 100 may include a memory of a type other than the RAM or may include a plurality of memories.

The HDD 103 is a nonvolatile storage device that stores software programs such as an operating system (OS), middleware, and application software, and data. Note that the information processing device 100 may include other types of storage devices such as a flash memory and a solid state drive (SSD) and may include a plurality of nonvolatile storage devices.

The GPU 104 outputs an image to a display 21 coupled to the information processing device 100 in accordance with the instruction from the CPU 101. As the display 21, any type of display such as a cathode ray tube (CRT) display, a liquid crystal display (LCD), a plasma display, or an organic electro-luminescence (OEL) display can be used.

The input interface 105 acquires an input signal from an input device 22 coupled to the information processing device 100 and outputs the acquired input signal to the CPU 101. As the input device 22, a pointing device such as a mouse, a touch panel, a touch pad, or a trackball, a keyboard, a remote controller, a button switch, or the like can be used. In addition, a plurality of types of input devices may be coupled to the information processing device 100.

The medium reader 106 is a reading device that reads a program and data recorded on a recording medium 23. As the recording medium 23, for example, a magnetic disk, an optical disc, a magneto-optical (MO) disk, a semiconductor memory, or the like can be used. The magnetic disk includes a flexible disk (FD) and an HDD. The optical disc includes a compact disc (CD) and a digital versatile disc (DVD).

The medium reader 106 copies, for example, the program and data read from the recording medium 23 to another recording medium such as the RAM 102 or the HDD 103. The read program is executed by the CPU 101, for example. Note that the recording medium 23 may be a portable recording medium and is sometimes used for distribution of the program and the data. In addition, the recording medium 23 and the HDD 103 will be sometimes referred to as computer-readable recording media.

The NIC 107 is an interface that is coupled to a network 24 and communicates with another computer through the network 24. The NIC 107 is coupled to a communication device such as a switch or a router by a cable, for example. The NIC 107 may be a wireless communication interface.

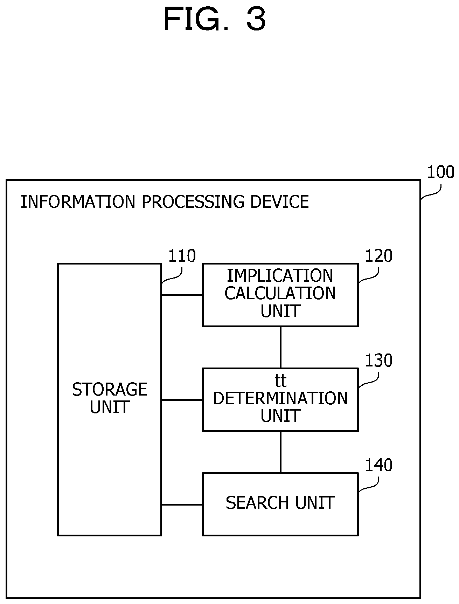

FIG. 3 is a diagram illustrating an example of functions of the information processing device.

The information processing device 100 includes a storage unit 110, an implication calculation unit 120, a tt determination unit 130, and a search unit 140. A storage area of the RAM 102 or the HDD 103 is used as the storage unit 110. The implication calculation unit 120, the tt determination unit 130, and the search unit 140 are implemented by the CPU 101 executing a program stored in the RAM 102.

The storage unit 110 stores information used in processing of the implication calculation unit 120, the tt determination unit 130, and the search unit 140. The storage unit 110 stores problem information defining a combinatorial optimization problem to be solved. The problem information includes information on a cost function indicating the cost desired to be minimized in the problem, information on constraint conditions imposed on the problem, and information on constants and variables included in the objective function and the constraint conditions. For example, when the problem to be solved is the above-described fixed cost constraint problem, the problem information includes information on the cost function represented by formula (3), information on the constraint conditions represented by formulas (4) and (5), and information defining the constants and variables used in formulas (3) to (5).

The storage unit 110 also stores a tt management table. The tt management table holds the tt of each of a plurality of state variables included in the energy function for each binary value. The tt is determined by the tt determination unit 130. Furthermore, the storage unit 110 stores information that manages the current state obtained by the search unit 140 searching for a solution and the best solution among the states obtained until the current time. The storage unit 110 further stores a tabu list that is used by the search unit 140 to search for solutions. The tabu list has independent iteration counters for each state variable.

The implication calculation unit 120 calculates the implication counts of the state variables for each binary value, based on the constraint conditions included in the problem information. The implication calculation unit 120 records the calculated implication counts in the tt management table. When the problem information includes a plurality of constraint conditions, the implication calculation unit 120 finds the implication counts for each constraint condition for a binary value of a state variable and sums up the implication counts for each constraint condition to calculate the implication count for the binary value of the state variable.

The tt determination unit 130 determines the tt for each binary value separately for the plurality of state variables according to the implication counts calculated by the implication calculation unit 120. The tt determination unit 130 records the determined tt in the tt management table. The tt determination unit 130 increases the tt as the implication count increases. For example, the tt determination unit 130 assigns tt = a*(implication count). A positive real number is denoted by a.

The search unit 140 searches for a solution by the tabu search method, for example executing the tabu search, based on information on the energy function created based on the problem information. The information on the energy function may be input to the information processing device 100 from the outside together with the problem information or may be generated by the CPU 101 based on the problem information. For example, the energy function E for the fixed cost constraint problem represented by formulas (3) to (5) is formulated as formula (6). The energy function E relating to formula (6) may be represented in the QUBO format of formula (1). The indices identifying each state variable in formula (6) may be associated with the indices for each state variable used in formula (1). The search unit 140 uses the value registered in the tt management table as tt used for setting the tabu list in the tabu search. As mentioned above, the tabu list has independent iteration counters for each state variable.

For example, when the state variable $x_i$ is updated to 0 in the tabu search, the search unit 140 sets the iteration counter [i] corresponding to the state variable $x_i$ with (the current number of iterations) + (the tt corresponding to when the state variable $x_i$ is updated to 0). In addition, when the state variable $x_i$ is updated to 1, the search unit 140 sets the iteration counter [i] with (the current number of iterations) + (the tt corresponding to when the state variable $x_i$ is updated to 1).

When a search termination condition is met, the search unit 140 outputs the best solution obtained so far. In the case of the problem to minimize the energy, the best solution is the solution with the lowest energy obtained so far. In the case of the problem to maximize the energy, the best solution is the solution with the highest energy obtained so far. In addition, the search termination condition is, for example, that the iterations have been executed a particular number of iterations. The search termination condition may be, for example, that a particular period of time has elapsed since the search start time point, or that a solution better than the target energy has been obtained.

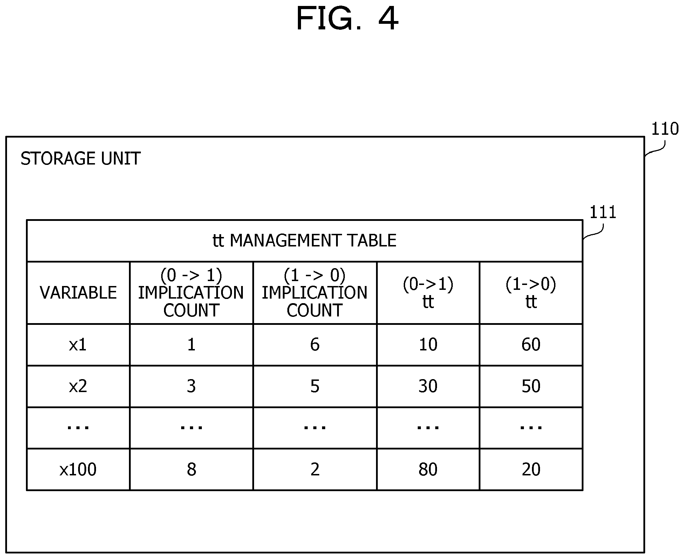

FIG. 4 is a diagram illustrating an example of the tt management table.

The tt management table 111 is stored in the storage unit 110. The tt management table 111 includes fields for variable, (0 -> 1) implication count, (1 -> 0) implication count, (0 -> 1) tt, and (1 -> 0) tt.

In the variable field, identification information on the state variable is registered. In the (0 -> 1) implication count field, the implication count when 1 is set in the relevant state variable is registered. Here, the expression "(0 -> 1)" indicates that the set value of the state variable is updated to the binary value "1" on the right side of "->" from the binary value "0" on the left side of "->", for example setting 1 in the relevant state variable. In the (1 -> 0) implication count field, the implication count when 0 is set in the relevant state variable is registered. In the (0 -> 1) tt field, the tt when 1 is set in the relevant state variable is registered. In the (1 -> 0) tt field, the tt when 0 is set in the relevant state variable is registered.

Here, the coefficient $\alpha$ used for tt calculation is assumed as $\alpha = 10$ as an example. In this case, for example, the tt management table 111 has a record containing the variable "x1", the (0 -> 1) implication count = "1", the (1 -> 0) implication count = "6", the (0 -> 1) tt = "10", and the (1 -> 0) tt = "60". The tt management table 111 also has records indicating the (0 -> 1) implication count, the (1 -> 0) implication count, the (0 -> 1) tt, and the (1 -> 0) tt for other state variables.

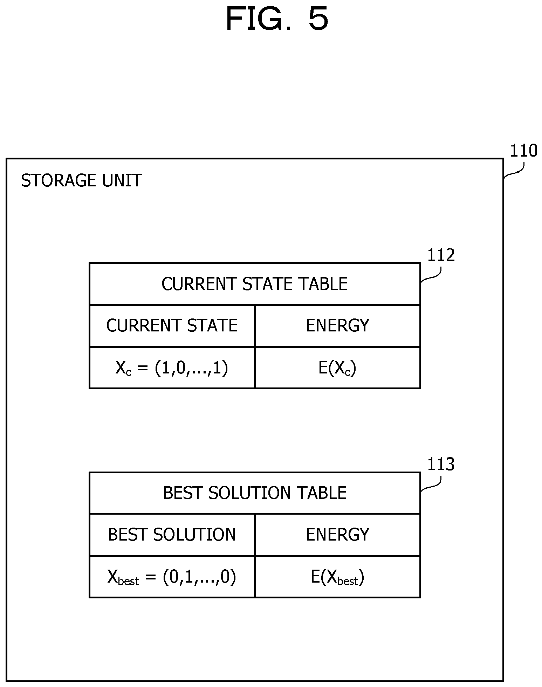

FIG. 5 is a diagram illustrating an example of a current state table and a best solution table.

The current state table 112 and the best solution table 113 are information for managing the states located in the solution search by the search unit 140. The current state table 112 and the best solution table 113 are stored in the storage unit 110.

The current state table 112 holds the current state of the search by the search unit 140. The current state table 112 includes fields for current state and energy. In the current state field, a current state $X_c$ is registered. The current state $X_c$ is represented by a bit string such as $X_c = (1, 0, ..., 1)$ as an example. In the energy field, energy $E(X_c)$ corresponding to the current state is registered. The energy in the current state is computed, for example, by integrating the amount of change in energy computed by formula (2) to the energy in the initial state each time the state transition is executed.

The best solution table 113 holds a best solution $X_{best}$ obtained until the current time in the search by the search unit 140. Similar to $X_c$, $X_{best}$ is represented by a bit string such as $X_{best} = (0, 1, ..., 0)$ as an example. The best solution table 113 includes fields for best solution and energy. In the best solution field, the best solution $X_{best}$ obtained until the current time is registered. In the energy field, energy $E(X_{best})$ corresponding to the best solution $X_{best}$ is registered.

Next, a processing procedure of the information processing device 100 will be described.

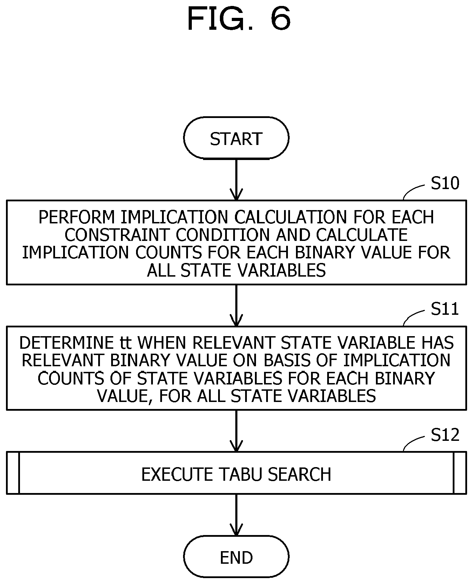

FIG. 6 is a flowchart illustrating a processing example of the information processing device.

(S10) The implication calculation unit 120 acquires the problem information, performs implication calculation for each constraint condition included in the problem information, and calculates the implication counts for each binary value for all state variables. When the problem information includes a plurality of constraint conditions, the implication calculation unit 120 assigns the sum of the implication counts calculated for a certain binary value of a certain state variable for each constraint condition, as the implication count corresponding to the certain binary value of the certain state variable. The implication calculation unit 120 registers the calculated implication counts in the tt management table 111.

(S11) For all state variables, the tt determination unit 130 determines the tt when the relevant state variable has the relevant binary value based on the implication counts of the state variables for each binary value. For example, the tt determination unit 130 determines the tt as tt = a*(implication count). The tt determination unit 130 registers the determined tt in the tt management table 111. As the value of $\alpha$, a value given in advance such as $\alpha = 3$ or $\alpha = 10$ is used as an example.

(S12) The search unit 140 executes the tabu search based on the information on the energy function E created from the problem information, and the tt management table 111. The search unit 140 outputs the solution obtained by the tabu search. Then, the processing of the information processing device 100 ends.

Here, in step S10, the implication calculation unit 120 finds the implication for a certain constraint condition, for example, as follows. Both of a and b denote binary values of 0 or 1.

(1) The implication calculation unit 120 fixes the state variable xp = a.
(2) The implication calculation unit 120 fixes the state variable xq = b.
(3) When the relevant constraint condition is not met no matter how the values of the state variables other than the state variables xp and xq are allocated, the implication calculation unit 120 generates the implication (xp = a -> xq! = b (i.e. xq = (1 - b))) for xp = a.

Then, the implication calculation unit 120 assigns the number of implications generated for xp = a as the implication count for xp = a.

In a first example, the problem information includes the constraint condition "x1 + x2 + x3 - 3*x4 $\leq$ 0" for state variables x1, x2, x3, and x4. This constraint condition is equivalent to "x1 $\leq$ x4, x2 $\leq$ x4, x3 $\leq$ x4". For example, when x4 = 0 is fixed, the constraint condition is assigned as "x1 + x2 + x3 $\leq$ 0". At this time, when x1 = 1 is assumed, the constraint condition will not be met no matter how x2 and x3 are allocated. Therefore, the implication (x4 = 0 -> x1 = 0) is generated. In this manner, the implication calculation unit 120 obtains the following three implications for x4 = 0.

$$(x4 = 0 \rightarrow x1 = 0)$$

$$(x4 = 0 \rightarrow x2 = 0)$$

$$(x4 = 0 \rightarrow x3 = 0)$$

Accordingly, the implication calculation unit 120 assigns the implication count for x4 = 0 to be three regarding the relevant constraint condition. The implication calculation unit 120 concludes the implication count for x4 = 0 to be three if there are no other constraint conditions. If there are another constraint condition, the implication calculation unit 120 concludes the value obtained by summing up the implication counts for x4 = 0 obtained for each constraint condition, as the implication count for x4 = 0.

For example, after concluding the implication count "3" for the state variable x4 = 0, the implication calculation unit 120 registers the (1 -> 0) implication count = "3" in the tt management table 111 for the state variable x4. Note that, for example, since the constraint condition in the first example has no implication for x4 = 1, the implication count for x4 = 1 is zero. After concluding the implication count "0" for x4 = 1, the implication calculation unit 120 registers the (0 -> 1) implication count = "0" in the tt management table 111 for the state variable x4. Similarly, the implication calculation unit 120 acquires the implications for each binary value to calculate the implication counts also for the state variables x1, x2, and x3 according to the above procedure from (1) to (3) and registers the calculated implication counts in the tt management table 111.

In a second example, the problem information includes the constraint condition "x1 + x2 + x3 + x4 $\leq$ 1" for state variables x1, x2, x3, and x4. The constraint condition in the second example is called the clique inequality and is a constraint condition that frequently appears in real problems. For example, when x4 = 1 is fixed, the constraint condition is assigned as "x1 + x2 + x3 $\leq$ 0". At this time, when x1 = 1 is assumed, the constraint condition will not be met no matter how x2 and x3 are allocated. Therefore, the implication (x4 = 1 -> x1 = 0) is generated. In this manner, the implication calculation unit 120 obtains the following three implications for x4 = 1.

$$(x4 = 1 \text{ -> } x1 = 0)$$

$$(x4 = 1 \text{ -> } x2 = 0)$$

$$(x4 = 1 \text{ -> } x3 = 0)$$

Accordingly, the implication calculation unit 120 assigns the implication count for x4 = 1 to be three regarding the relevant constraint condition. After concluding the implication count "3" for the state variable x4 = 1, the implication calculation unit 120 registers the (0 -> 1) implication count = "3" in the tt management table 111. Note that, for example, since the constraint condition in the second example has no implication for x4 = 0, the implication count for x4 = 0 is zero. After concluding the implication count "0" for x4 = 0, the implication calculation unit 120 registers the (1 -> 0) implication count = "0" in the tt management table 111 for the state variable x4. Similarly, the implication calculation unit 120 acquires the implications for each binary value to calculate the implication counts also for the state variables x1, x2, and x3 according to the above procedure from (1) to (3) and registers the calculated implication counts in the tt management table 111. In the case of the constraint condition in the second example, implications similar to the implications for the state variable x4 are obtained also for the state variables x1, x2, and x3.

Then, based on the implication counts of the state variable for each binary value registered in the tt management table 111, the tt determination unit 130 determines the tt of the state variable for each binary value. The tt determination unit 130 registers the determined tt in the tt management table 111. As described above, the tt is assigned as an increased value as the implication count increases. For example, as illustratively mentioned in step S11, the tt determination unit 130 may determine the tt so as to be in proportion to the implication count.

Next, a procedure for executing a tabu search based on the tt management table 111 by the search unit 140 will be described.

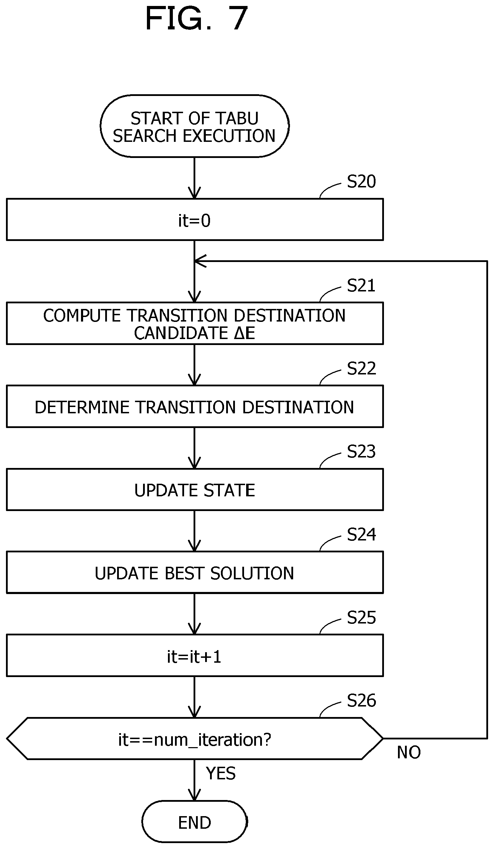

FIG. 7 is a flowchart illustrating an example of tabu search execution.

The tabu search execution relates to step S12.

(S20) The search unit 140 sets a variable it indicating the number of iterations as it = 0. The search unit 140 registers the initial state and the energy in the initial state in the current state table 112 and the best solution table 113. In addition, the search unit 140 sets the iteration counters in the tabu list to zero for all state variables. In addition, the search unit 140 acquires in advance the value of the total number of iterations num_iteration for which the tabu search is to be performed. Above num iteration relates to the whole search period or the full number of searches for which the tabu search is to be executed and is given to the information processing device 100 in advance.

(S21) The search unit 140 computes $\Delta E$ when transitioning to a transition destination candidate. The transition destination candidate is a state obtained by updating the value of one update candidate state variable from the current state. The amount of change $\Delta E$ is computed as the amount of change in the energy function E when the value of the state variable as an update candidate is changed to a different binary value from the current binary value. When the energy function E is represented by formula (1), $\Delta E$ is computed by formula (2). In step S21, the search unit 140 computes $\Delta E$ for the case where each of all state variables is treated as an update candidate.

(S22) The search unit 140 determines the transition destination based on $\Delta E$ for each transition destination candidate computed in step S21. For example, the search unit 140 determines the transition destination candidate with the best $\Delta E$ as the transition destination. At this time, among all transition destination candidates, the search unit 140 excludes the state obtained by updating the value of the state variable whose iteration counter is equal to or greater than the current number of iterations it, from the transition destination candidates. However, when the state obtained by updating the value of the state variable whose iteration counter is equal to or greater than the current number of iterations it has energy better than the energy of the best solution held in the best solution table 113, the search unit 140 adds the state to the transition destination candidates.

(S23) The search unit 140 updates the state. For example, the search unit 140 updates the record of the current state table 112 with the transition destination state for this time determined in step S22 and the energy of the state. At this time, the search unit 140 acquires the state variable $x_j$ whose value has been updated and the tt corresponding to the updated binary value of the state variable $x_j$, from the tt management table 111. The search unit 140 then sets the iteration counter [j] = it + tt for the iteration counter [j] in the tabu list.

(S24) The search unit 140 updates the best solution. For example, when the energy of the transition destination state for this time determined in step S22 is better than the energy of the best solution in the best solution table 113, the search unit 140 updates the record of the best solution table 113 with the transition destination state for this time and the energy of the state.

(S25) The search unit 140 increments it. For example, the search unit 140 sets it = it + 1.

(S26) The search unit 140 verifies whether or not it has coincided with the total number of iterations num_iteration, for example whether or not it == num iteration is fulfilled. When it has coincided with num_iteration, for example when it == num iteration is fulfilled, the search unit 140 outputs the best solution held in best solution table 113 and ends the tabu search. When it has not coincided with num iteration (when it < num iteration is still true), the process proceeds to step S21.

In this way, the information processing device 100 uses the tt management table 111 to execute the tabu search. This allows the information processing device 100 to easily escape from the local solution and to raise the likelihood of obtaining a good solution in a short period of time.

Next, another processing example of tt determination by the information processing device 100 will be described. The information processing device 100 may execute, for example, the following procedure instead of the procedure in FIG. 6.

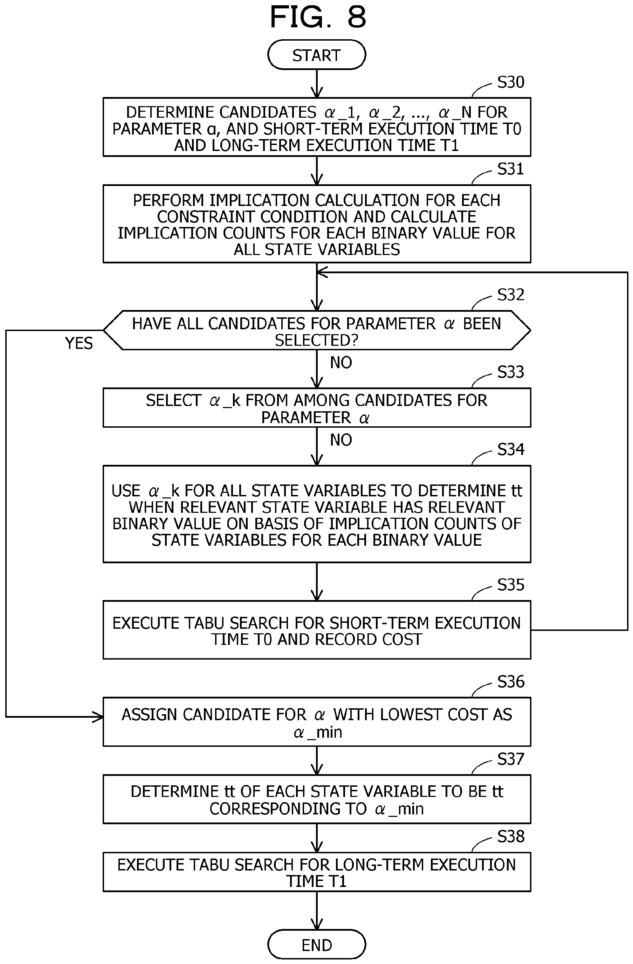

FIG. 8 is a flowchart illustrating another processing example of the information processing device.

(S30) The tt determination unit 130 determines candidates $\alpha\_1$, $\alpha\_2$, ..., $a\_N$ for a parameter $\alpha$ used for tt calculation, and short-term execution time T0 and long-term execution time T1 for the tabu search. Here, for example, $\alpha\_1 < \alpha\_2 < ... < a\_N$ is fulfilled. In addition, T0 < T1 is fulfilled. For example, the tt determination unit 130 may acquire values input from the outside as $\alpha\_1$, $\alpha\_2$, ..., $\alpha\_N$, T0, and T1.

(S31) The implication calculation unit 120 acquires the problem information, performs implication calculation for each constraint condition included in the problem information, and calculates the implication counts for each binary value for all state variables. The implication calculation unit 120 registers the calculated implication counts in the tt management table 111.

(S32) The tt determination unit 130 verifies whether or not all the candidates for the parameter $\alpha$ have been selected. When all have been selected, the process proceeds to step S36. When not all have been selected, the process proceeds to step S33.

(S33) The tt determination unit 130 selects $\alpha\_k$ from among the candidates for the parameter a. For example, the tt determination unit 130 may select one $\alpha\_k$ in the order of $\alpha\_1$, $\alpha\_2$, ... from among unselected candidates for the parameter a.

(S34) Using $a\_k$ for all state variables, the tt determination unit 130 determines the tt when the relevant state variable has the relevant binary value based on the implication counts of the state variables for each binary value. The tt determination unit 130 stores the tt determined in step S34 in the storage unit 110.

(S35) The search unit 140 determines num iteration according to the short-term execution time T0 and executes the tabu search. The tabu search in step S35 is executed by a procedure similar to the procedure in FIG. 7. In the tabu search in step S35, the search unit 140 uses the tt determined in step S34 to set the iteration counters in the tabu list. The search unit 140 records the cost of the best solution, for example the energy, obtained in the tabu search for this time, in the storage unit 110 in association with $\alpha\_k$. Then, the process proceeds to step S32. Note that information on the tt stored in the storage unit 110 in step S34 may be held in association with $\alpha\_k$ or may be deleted in response to the completion of step S35.

(S36) The tt determination unit 130 refers to the information on each candidate for $\alpha$ and the costs recorded in the storage unit 110 by repeatedly executing step S35 and assigns the candidate for $\alpha$ with the lowest cost as $\alpha\_min$.

(S37) The tt determination unit 130 determines the tt of each state variable to be the tt corresponding to $\alpha\_min$. When the tt corresponding to $\alpha\_min$ has been held in the storage unit 110, the tt determination unit 130 may use the tt as it is. When the tt corresponding to $\alpha\_min$ is not held in the storage unit 110, the tt determination unit 130 recomputes the tt using $a\_min$, as in step S34. The tt determination unit 130 registers the determined tt in the tt management table 111.

(S38) The search unit 140 determines num iteration according to the long-term execution time T1 and executes the tabu search. In step S38, the tabu search is executed for a longer period of time than in step S35. The tabu search in step S38 is executed with a procedure similar to the procedure in FIG. 7. In the tabu search in step S38, the search unit 140 uses the tt determined in step S37 and registered in the tt management table 111 to set the iteration counters in the tabu list. The search unit 140 outputs the best solution obtained by executing the tabu search in step S38. Then, the processing of the information processing device 100 ends.

In this way, the information processing device 100 may determine optimal $\alpha$ for the problem by executing the tabu search for a relatively short period of time with the tt determined using each of a plurality of candidates for $\alpha$. By properly determining $\alpha$, the information processing device 100 may raise the likelihood of reaching a better solution and may further enhance the solution performance.

As described above, the information processing device 100 executes the following processes.

The implication calculation unit 120 acquires problem information indicating a problem represented by the Ising-type energy function, for example an energy function including a plurality of state variables. Based on a constraint condition that is included in the problem information and for at least a part of the plurality of state variables, the implication calculation unit 120 acquires the number of second state variables whose set values for satisfying the constraint condition are determined to be specified binary values when a first binary value is set in a first state variable. In the tabu search, the tt determination unit 130 determines the number of searches for which the first state variable is prohibited from being updated from the first binary value when the first state variable is updated to the first binary value, based on the number of second state variables corresponding to the first state variable and the first binary value. The tabu search is a search approach for a solution to a problem that repeatedly performs the process of updating the value of the state variable with the best amount of change in the value of the energy function when the value of any one state variable among a plurality of state variables is updated.

This allows the information processing device 100 to enhance the solution performance. For example, by automatic adjustment of the number of searches for which the first state variable is prohibited from being updated from the first binary value when the first state variable is updated to the first binary value, for example the tabu tenure, the information processing device 100 may attain higher ability to escape from the local solution and obtain an excellent solution in a short period of time. Note that the period relating to the tabu tenure may be predefined in units of time such as seconds or minutes or may be predefined according to the number of iterations.

In determining the number of searches relating to the tabu tenure, the tt determination unit 130 increases the number of searches as the number of second state variables increases. This allows the information processing device 100 to properly adjust the number of searches according to the number of second state variables. For example, the information processing device 100 may properly reduce the likelihood of transitioning to another state from a certain local solution and thereafter transitioning again to the same local solution, which may improve the ability to escape from the local solution. In addition, by decreasing the number of searches as the number of second state variables decreases, the information processing device 100 may avoid excessive restriction of the solution search space and raise the likelihood of discovering a better solution.

For example, the tt determination unit 130 may calculate the number of searches relating to the tabu tenure, by multiplying the number of second state variables by the positive coefficient $\alpha$. This allows the information processing device 100 to properly adjust the number of searches according to the number of second state variables.

In addition, in determining the number of searches relating to the tabu tenure, the tt determination unit 130 may calculate a plurality of candidate numbers, which are candidates for the number of searches, by multiplying the number of second state variables by each of a plurality of candidate coefficients, which are candidates for the coefficient $\alpha$. Then, the tt determination unit 130 may determine the coefficient $\alpha$ used for calculating the number of searches relating to the tabu tenure used for searches, from among the plurality of candidate coefficients, based on the values of the energy function corresponding to the solutions obtained by searches executed using each of the plurality of candidate numbers.

This allows the information processing device 100 to properly determine the coefficient used to determine the number of searches relating to the tabu tenure. As a result, the information processing device 100 may enhance the solution performance of the tabu search. For example, the tt determination unit 130 assigns the candidate coefficient that gives the candidate number having the best of the values of the energy function corresponding to the solutions obtained by searches executed using each of the plurality of candidate numbers, as the coefficient $\alpha$ used for calculating the number of searches relating to the tabu tenure in the actual search. Note that $\alpha\_1$, $\alpha\_2$, ..., $\alpha\_N$ mentioned above are examples of the plurality of candidate coefficients.

In addition, the problem information may include another constraint condition. In this case, the implication calculation unit 120 acquires the number of third state variables whose set values for satisfying the another constraint condition are determined to be specified binary values when the first binary value is set in the first state variable, based on the another constraint condition. The tt determination unit 130 determines the number of searches relating to the tabu tenure, based on the sum of the number of second state variables corresponding to the first state variable and the first binary value and the number of third state variables corresponding to the first state variable and the first binary value.

This allows the information processing device 100 to properly determine the number of searches relating to the tabu tenure, for each of the binary values of the state variables, according to a plurality of constraint conditions imposed on the problem. As a result, the information processing device 100 may enhance the ability to escape from the local solution in the tabu search and may enhance the solution performance. Note that the set of a plurality of state variables included in a certain constraint condition (constraint formula) and the set of a plurality of state variables included in another constraint condition (constraint formula) may include an overlapping portion and a non-overlapping portion.

In addition, the information processing device 100 may further include the search unit 140. The search unit 140 executes searches for solutions by the tabu search method. After the first state variable is updated to the first binary value in the searches, the search unit 140 excludes the first state variable from the update candidates until the number of searches relating to the tabu tenure has elapsed. The number of searches is the number of searches determined by the tt determination unit 130 based on the number of second state variables corresponding to the first state variable and the first binary value. This allows the information processing device 100 to enhance the solution performance.

Even if the number of searches relating to the tabu tenure has not elapsed, the search unit 140 may permit to update the value of the first state variable when the best value of the values of the energy function already acquired through the searches by updating the value of the first state variable is updated. This allows the information processing device 100 to raise the likelihood of discovering a better solution and to enhance the solution performance.

Note that the information processing according to the first embodiment may be implemented by causing the processing unit 12 to execute a program. In addition, the information processing according to the second embodiment may be implemented by causing the CPU 101 to execute the program. The program can be recorded in the computer-readable recording medium 23.

For example, the program can be distributed by distributing the recording medium 23 in which the program is recorded. Alternatively, the program may be stored in another computer and distributed via a network. For example, a computer may store (install) the program recorded in the recording medium 23 or received from another computer, in a storage device such as the RAM 102 or the HDD 103, and read the program from the storage device to execute the program.

## Claims

1. An information processing program that causes at least one computer to execute a process, the process comprising:

   storing problem information that indicates a problem represented by an energy function that includes a plurality of state variables;

   based on a constraint condition for at least a part of the plurality of state variables, acquiring a number of second state variables whose set values satisfy the constraint condition determined by binary values when a first binary value is set in a first state variable;

   determining a number of searches for prohibiting the first state variable from being updated from the first binary value, based on the number of second state variables that corresponds to the first state variable and the first binary value; and

   searching for solutions to a problem by repeating updating values of one state variable among the plurality of state variables based on an amount of change in values of the energy function for the number of searches for prohibiting.

2. The information processing program according to claim 1, wherein the determining the number of searches includes increasing the number of searches as the number of second state variables increases.

3. The information processing program according to claim 1, wherein the determining the number of searches includes acquiring the number of searches by multiplying the number of second state variables by a coefficient that is positive.

4. The information processing program according to claim 3, wherein the determining the number of searches includes:

   acquiring a plurality of candidate numbers which are candidates for the number of searches, by multiplying the number of second state variables by each of a plurality of candidate coefficients which are the candidates for the coefficient; and

   determining the coefficient used for the acquiring the number of searches from among the plurality of candidate coefficients based on the values of the energy function that correspond to the solutions obtained by searches executed by using each of the plurality of candidate numbers.

5. The information processing program according to claim 1, wherein

   the problem information includes second constraint condition, and

   the process further comprising:

   acquiring the number of third state variables whose set values satisfy the second constraint condition determined by the binary values when the first binary value is set in the first state variable, based on the second constraint condition; and

   determining the number of searches, based on a sum of the number of second state variables that corresponds to the first state variable and the first binary value and the number of third state variables that corresponds to the first state variable and the first binary value.

6. The information processing program according to claim 1, wherein the process further comprising searching for the solutions by excluding the first state variable from update candidates after the first state variable is updated to the first binary value until the number of searches has elapsed.

7. The information processing program medium according to claim 6, wherein the searching for the solutions includes permitting to update the values of the first state variable when a best value is updated, the best value being acquired by updating the values of the first state variable.

8. An information processing method for a computer to execute a process comprising:

   storing problem information that indicates a problem represented by an energy function that includes a plurality of state variables;
   based on a constraint condition for at least a part of the plurality of state variables, acquiring a number of second state variables whose set values satisfy the constraint condition determined by binary values when a first binary value is set in a first state variable;
   determining a number of searches for prohibiting the first state variable from being updated from the first binary value, based on the number of second state variables that corresponds to the first state variable and the first binary value; and
   searching for solutions to a problem by repeating updating values of one state variable among the plurality of state variables based on an amount of change in values of the energy function for the number of searches for prohibiting.

9. The information processing method according to claim 8, wherein the determining the number of searches includes increasing the number of searches as the number of second state variables increases.

10. The information processing method according to claim 8, wherein the determining the number of searches includes acquiring the number of searches by multiplying the number of second state variables by a coefficient that is positive.

11. The information processing method according to claim 10, wherein the determining the number of searches includes:

   acquiring a plurality of candidate numbers which are candidates for the number of searches, by multiplying the number of second state variables by each of a plurality of candidate coefficients which are the candidates for the coefficient; and
   determining the coefficient used for the acquiring the number of searches from among the plurality of candidate coefficients based on the values of the energy function that correspond to the solutions obtained by searches executed by using each of the plurality of candidate numbers.

12. The information processing method according to claim 8, wherein

   the problem information includes second constraint condition, and
   the process further comprising:

      acquiring the number of third state variables whose set values satisfy the second constraint condition determined by the binary values when the first binary value is set in the first state variable, based on the second constraint condition; and
      determining the number of searches, based on a sum of the number of second state variables that corresponds to the first state variable and the first binary value and the number of third state variables that corresponds to the first state variable and the first binary value.

13. The information processing method according to claim 8, wherein the process further comprising searching for the solutions by excluding the first state variable from update candidates after the first state variable is updated to the first binary value until the number of searches has elapsed.

14. The information processing method according to claim 13, wherein the searching for the solutions includes permitting to update the values of the first state variable when a best value is updated, the best value being acquired by updating the values of the first state variable.

**15.** An information processing device comprising:

one or more memories; and
one or more processors coupled to the one or more memories and the one or more processors configured to:

a storage unit that stores problem information that indicates a problem represented by an energy function that includes a plurality of state variables; and
a processing unit that:

based on a constraint condition for at least a part of the plurality of state variables, acquires a number of second state variables whose set values satisfy the constraint condition determined by binary values when a first binary value is set in a first state variable,
determines a number of searches for prohibiting the first state variable from being updated from the first binary value, based on the number of second state variables that corresponds to the first state variable and the first binary value, and
searches for solutions to a problem by repeating updating values of one state variable among the plurality of state variables based on an amount of change in values of the energy function for the number of searches for prohibiting.

# FIG. 1

INFORMATION PROCESSING DEVICE 10

STORAGE UNIT 11

PROCESSING UNIT 12

CONSTRAINT CONDITION

EXAMPLE: x1+x2+x3-3*x4 ≤ 0

x4 = 0 -> x1 = 0

x4 = 0 -> x2 = 0

x4 = 0 -> x3 = 0

NUMBER OF STATE VARIABLES WHOSE SET VALUES FOR SATISFYING CONSTRAINT CONDITION ARE DETERMINED TO BE SPECIFIED BINARY VALUES WHEN x4 = 0 IS TRUE: n = 3

NUMBER OF SEARCHES FOR WHICH x4 IS PROHIBITED FROM BEING UPDATED WHEN x4 IS UPDATED TO 0: tt(n) = tt(3)

# FIG. 2

**INFORMATION PROCESSING DEVICE** 100

| | 101 | | | 104 | | 21 |
| CPU | | | GPU | | | |

| | 102 | | | 105 | | 22 |
| RAM | | | INPUT INTERFACE | | | |

| | 103 | | | 106 | | 23 |
| HDD | | | MEDIUM READER | | | |

| | | | | 107 | | 24 |
| | | | NIC | | | NETWORK |

# FIG. 3

INFORMATION PROCESSING DEVICE 100

STORAGE UNIT 110

IMPLICATION CALCULATION UNIT 120

tt DETERMINATION UNIT 130

SEARCH UNIT 140

# FIG. 4

110

**STORAGE UNIT**

111

| tt MANAGEMENT TABLE | | | | |
|---|---|---|---|---|
| VARIABLE | (0 -> 1) IMPLICATION COUNT | (1 -> 0) IMPLICATION COUNT | (0->1) tt | (1->0) tt |
| x1 | 1 | 6 | 10 | 60 |
| x2 | 3 | 5 | 30 | 50 |
| ... | ... | ... | ... | ... |
| x100 | 8 | 2 | 80 | 20 |

# FIG. 5

STORAGE UNIT    110

| CURRENT STATE TABLE | | 112 |
|---|---|---|
| CURRENT STATE | ENERGY | |
| $X_c = (1,0,...,1)$ | $E(X_c)$ | |

| BEST SOLUTION TABLE | | 113 |
|---|---|---|
| BEST SOLUTION | ENERGY | |
| $X_{best} = (0,1,...,0)$ | $E(X_{best})$ | |

# FIG. 6

```
┌─────────┐
│  START  │
└─────────┘
     │
     ▼                                          S10
┌────────────────────────────────────────────┐
│  PERFORM IMPLICATION CALCULATION FOR EACH   │
│   CONSTRAINT CONDITION AND CALCULATE        │
│  IMPLICATION COUNTS FOR EACH BINARY VALUE FOR│
│          ALL STATE VARIABLES                │
└────────────────────────────────────────────┘
     │
     ▼                                          S11
┌────────────────────────────────────────────┐
│  DETERMINE tt WHEN RELEVANT STATE VARIABLE HAS│
│  RELEVANT BINARY VALUE ON BASIS OF IMPLICATION│
│   COUNTS OF STATE VARIABLES FOR EACH BINARY  │
│        VALUE, FOR ALL STATE VARIABLES        │
└────────────────────────────────────────────┘
     │
     ▼                                          S12
║────────────────────────────────────────────║
║            EXECUTE TABU SEARCH              ║
║────────────────────────────────────────────║
     │
     ▼
┌─────────┐
│   END   │
└─────────┘
```

# FIG. 7

START OF TABU
SEARCH EXECUTION

S20
it=0

S21
COMPUTE TRANSITION DESTINATION
CANDIDATE ΔE

S22
DETERMINE TRANSITION DESTINATION

S23
UPDATE STATE

S24
UPDATE BEST SOLUTION

S25
it=it+1

S26
it==num_iteration?

NO

YES

END

# FIG. 8

```
                    ( START )
                        │
                        ▼                        ⟋ S30
┌──────────────────────────────────────────────────┐
│ DETERMINE CANDIDATES α_1, α_2, ..., α_N FOR       │
│ PARAMETER α, AND SHORT-TERM EXECUTION TIME T0     │
│ AND LONG-TERM EXECUTION TIME T1                   │
└──────────────────────────────────────────────────┘
                        │
                        ▼                        ⟋ S31
┌──────────────────────────────────────────────────┐
│ PERFORM IMPLICATION CALCULATION FOR EACH          │
│ CONSTRAINT CONDITION AND CALCULATE                │
│ IMPLICATION COUNTS FOR EACH BINARY VALUE FOR      │
│ ALL STATE VARIABLES                               │
└──────────────────────────────────────────────────┘
                        │                            ◄──────────┐
                        ▼                        ⟋ S32          │
         ╱────────────────────────────────────────╲            │
  YES    │  HAVE ALL CANDIDATES FOR PARAMETER α BEEN│           │
◄────────│  SELECTED?                               │           │
         ╲────────────────────────────────────────╱            │
                        │ NO                                    │
                        ▼                        ⟋ S33          │
┌──────────────────────────────────────────────────┐           │
│ SELECT α_k FROM AMONG CANDIDATES FOR              │           │
│ PARAMETER α                                       │           │
└──────────────────────────────────────────────────┘           │
                        │ NO                                    │
                        ▼                        ⟋ S34          │
┌──────────────────────────────────────────────────┐           │
│ USE α_k FOR ALL STATE VARIABLES TO DETERMINE tt   │           │
│ WHEN RELEVANT STATE VARIABLE HAS RELEVANT         │           │
│ BINARY VALUE ON BASIS OF IMPLICATION COUNTS OF    │           │
│ STATE VARIABLES FOR EACH BINARY VALUE             │           │
└──────────────────────────────────────────────────┘           │
                        │                                       │
                        ▼                        ⟋ S35          │
┌──────────────────────────────────────────────────┐           │
│ EXECUTE TABU SEARCH FOR SHORT-TERM EXECUTION      │───────────┘
│ TIME T0 AND RECORD COST                           │
└──────────────────────────────────────────────────┘
```

```
                        ▼                        ⟋ S36
┌──────────────────────────────────────────────────┐
│ ASSIGN CANDIDATE FOR α WITH LOWEST COST AS        │
│ α_min                                             │
└──────────────────────────────────────────────────┘
                        │
                        ▼                        ⟋ S37
┌──────────────────────────────────────────────────┐
│ DETERMINE tt OF EACH STATE VARIABLE TO BE tt      │
│ CORRESPONDING TO α_min                            │
└──────────────────────────────────────────────────┘
                        │
                        ▼                        ⟋ S38
┌──────────────────────────────────────────────────┐
│ EXECUTE TABU SEARCH FOR LONG-TERM EXECUTION       │
│ TIME T1                                           │
└──────────────────────────────────────────────────┘
                        │
                        ▼
                    ( END )
```

**EUROPEAN SEARCH REPORT**

Application Number

EP 23 15 1986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIAHAI WANG ET AL: "Combining tabu Hopfield network and estimation of distribution for unconstrained binary quadratic programming problem", EXPERT SYSTEMS WITH APPLICATIONS, vol. 38, no. 12, 1 November 2011 (2011-11-01), - 31 December 2011 (2011-12-31), pages 14870-14881, XP028268622, ISSN: 0957-4174, DOI: 10.1016/J.ESWA.2011.05.060 [retrieved on 2011-06-15] * abstract; page 14870 - page 14875 * | 1-15 | INV. G06N5/01 |
| A | ALFREDO TANG MONTANE F ET AL: "A tabu search algorithm for the vehicle routing problem with simultaneous pick-up and delivery service", COMPUTERS AND OPERATIONS RESEARCH, OXFORD, GB, vol. 33, no. 3, 1 March 2006 (2006-03-01), pages 595-619, XP024985361, ISSN: 0305-0548, DOI: 10.1016/J.COR.2004.07.009 [retrieved on 2006-03-01] * pages 1, 12 * | 1-15 | TECHNICAL FIELDS SEARCHED (IPC) G06N |

The present search report has been drawn up for all claims

| Place of search | Date of completion of the search | Examiner |
|---|---|---|
| The Hague | 3 October 2023 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010525431 A
- JP 2003219558 A
- US 20120045136
- US 20160042294